# EUROPÄISCHE PATENTSCHRIFT

(11) **EP 2 644 516 B1**
(45) Veröffentlichungstag und Bekanntmachung des Hinweises auf die Patenterteilung: **21.10.2015**
(21) Anmeldenummer: 13001481.4
(22) Anmeldetag: 22.03.2013
(51) Int. Cl.: B65B 31/02, B65B 7/16, B65B 51/10, B65B 47/00, B65B 61/00

(54) **Verpackungsmaschine mit einer Siegelvorrichtung**
Packaging machine with a sealing device
Machine d'emballage dotée d'une scelleuse

(30) Priorität: 30.03.2012 DE 102012006696
(43) Veröffentlichungstag der Anmeldung: 02.10.2013
(73) Patentinhaber: Multivac Sepp Haggenmüller GmbH & Co. KG, 87787 Wolfertschwenden (DE)
(72) Erfinder: Holzem, Dieter, 88453 Erolzheim (DE); Geble, Christian, 87466 Oy/Mittelberg (DE)
(74) Vertreter: Grünecker Patent- und Rechtsanwälte PartG mbB

(56) Entgegenhaltungen:
- EP-A2- 2 380 810
- WO-A1-2012/080932
- DE-A1-102006 040 807

## Beschreibung

Die Erfindung bezieht sich auf eine Verpackungsmaschine mit den Merkmalen des Anspruchs 1.

Aus der EP 2 380 810 A2 ist eine Schalenverschließmaschine mit zwei aufeinander folgenden Siegelvorrichtungen zum Aufbringen von jeweils einer Oberfolie auf die Schale bekannt. Die WO 2012/080932 A1 offenbart eine Siegelvorrichtung zum Siegeln einer Oberfolie auf eine Schale, wobei das Siegelwerkzeugoberteil mehrere Druckelemente mit eigenen Pneumatikzylindern umfasst.

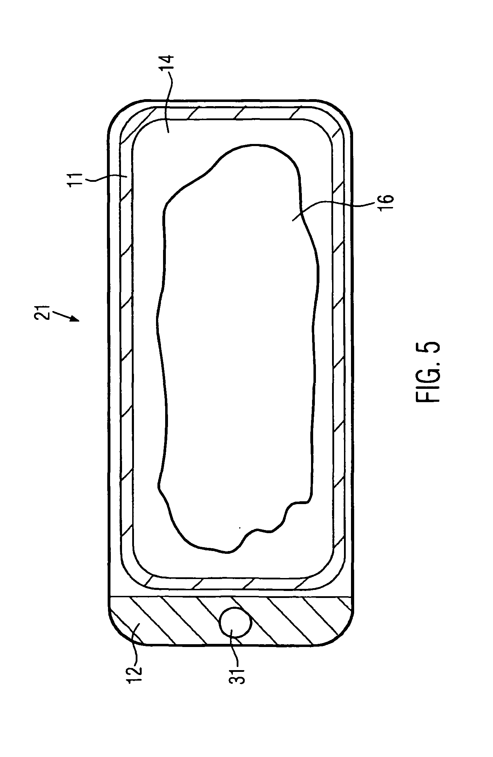

Es ist sind Maschinen der Anmelderin bekannt, die eine Siegelstation umfassen, um Verpackungen im Stile von Figur 5 herzustellen. Die Anforderungen an diese Verpackung umfassen zum Einen eine umlaufende Siegelnaht, um das Packungsinnere beinhaltend ein Lebensmittel unter Vakuum oder modifizierter Atmosphäre luftdicht zu verschließen, indem eine Deckelfolie auf eine geformte Unterfolie gesiegelt wird. Diese umlaufende Siegelnaht weist eine zum Öffnen der Verpackung von der Unterfolie lösbare Deckelfolie auf. Zum Anderen wird ein weiterer Bereich außerhalb dieser Siegelnaht flächig gesiegelt, um einen stabilen Bereich zum Aufhängen der Verpackung zur Verfügung zu stellen. Diese flächige Siegelung ist unlösbar gesiegelt. Erzeugbar ist die flächige Siegelung durch einen höheren oder niedrigeren Siegeldruck als bei der Siegelnaht. Hierzu ist eine mechanische Abstimmung vorgesehen, die auf die unterschiedlichen Folienkombinationen abgestimmt werden muss. Der erhöhte oder niedrigere Siegeldruck bzw. eine Veränderung des Siegeldrucks der flächigen Siegelung darf sich nicht auf den Siegeldruck der Siegelnaht auswirken. Die mechanische Abstimmung erfolgt über die Veränderung des Überstandes bzw. den Rückstand der Siegelfläche der Siegelplatte der flächigen Siegelung gegenüber der Siegelnaht und ist sehr aufwendig und schwierig einzustellen. Beispielweise erfolgt die Einstellung des Überstands mittels unterschiedlich dicker Unterlegeplatten.

Aufgabe der vorliegenden Erfindung ist es, eine Verpackungsmaschine mit einer Siegelvorrichtung zur Verfügung zu stellen, die die Einstellmöglichkeiten der Siegelparameter wie Siegelkraft, Siegeltemperatur und/oder Siegelzeit für verschiedene Siegelungen innerhalb einer Siegelvorrichtung bzw. einer Verpackung verbessert, wobei der Begriff "Siegelung" im Folgenden auch die oben genannten Siegelnähte einschließt.

Diese Aufgabe wird gelöst durch eine Verpackungsmaschine mit den Merkmalen des Anspruchs 1. Vorteilhafte Weiterbildungen der Erfindung sind in den Unteransprüchen angegeben.

Die erfindungsgemäße Verpackungsmaschine umfasst eine Siegelvorrichtung, wobei die Siegelvorrichtung wenigstens ein erstes und ein zweites Siegelwerkzeug zum Erzeugen einer ersten und einer zweiten Siegelung von einer Unterbahn mit einer Oberbahn umfasst. Dabei sind für die Siegelwerkzeuge Aktoren vorgesehen, mittels derer die Siegelkräfte der Siegelwerkzeuge individuell einstellbar sind, wobei das erste Siegelwerkzeug zum Erzeugen einer umlaufenden Siegelnaht um ein Produkt herum und das zweite Siegelwerkzeug zum Erzeugen einer flächigen Siegelung vorgesehen sind. Dies bringt den Vorteil, dass die Siegelkräfte für unterschiedlich ausgeprägte Siegelungen für unterschiedliche Anforderungen an eine einzige Verpackung unabhängig voneinander einstellbar sind.

Vorzugsweise sind die Aktoren als Membrane, Pneumatikzylinder oder motorische Antriebe vorgesehen, um eine einzelne Ansteuerung zur Verfügung zu stellen und um Siegelkräfte mit bis zu 12 kN bzw. Siegeldrücke mit bis zu 3 N/mm² zu ermöglichen.

Die Verpackungsmaschine umfasst bevorzugt eine Steuerung, mittels derer die Siegelkraft, die Siegeltemperatur und/oder die Siegelzeit für die erste und zweite Siegelung separat einstellbar ist, um eine automatische Umstellung von unterschiedlichen Maschineneinstellungen für unterschiedliche Verpackungen bereitstellen zu können.

In einer bevorzugten Ausführung sind das erste Siegelwerkzeug zum Erzeugen einer umlaufenden Siegelnaht um ein Produkt herum und das zweite Siegelwerkzeug zum Erzeugen einer flächigen Siegelung vorgesehen. Durch das Vorsehen von unterschiedlichen Siegelwerkzeugen mit jeweils eigenen Aktoren ist eine schnelle und einfache Veränderung der jeweiligen Siegelung ohne Rückwirkung auf die andere Siegelung möglich.

Vorzugsweise sind die Siegelnaht des ersten Siegelwerkzeugs und die Siegelung des zweiten Werkzeugs benachbart bzw. überlappungsfrei sind, da nur ohne eine Überlappung der Siegelflächen Rückwirkungen von einer Siegelung zur anderen Siegelung ausgeschlossen werden können.

Bevorzugt sind die erste und zweite Siegelung zeitgleich erzeugbar, um die Prozesszeit für den Siegelvorgang für die Verpackung nicht unnötig zu verlängern.

Im Folgenden wird ein vorteilhaftes Ausführungsbeispiel der Erfindung anhand einer Zeichnung näher erläutert. Im Einzelnen zeigen:
- Fig. 1: eine schematische Seitenansicht einer erfindungsgemäßen Tiefziehverpackungsmaschine,
- Fig. 2: eine schematische Seitenansicht im Schnitt der Siegelstation im offenen Zustand,
- Fig. 3: eine schematische Seitenansicht im Schnitt der Siegelstation im geschlossenen Zustand,
- Fig. 4: eine schematische Seitenansicht im Schnitt der Siegelstation während des Siegelprozesses,
- Fig. 5: eine Draufsicht einer Verpackung mit einer Siegelnaht und einer flächigen Siegelung.

Gleiche Komponenten sind in den Figuren durchgängig mit gleichen Bezugszeichen versehen.

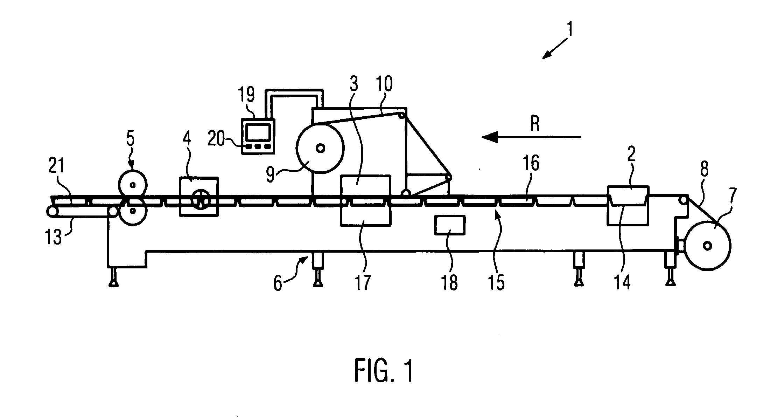

Figur 1 zeigt in schematischer Ansicht eine erfindungsgemäße Tiefziehverpackungsmaschine 1. Diese Tiefziehverpackungsmaschine 1 weist eine Formstation 2, eine Siegelstation 3 (auch als Siegelvorrichtung bezeichnet), eine Querschneideeinrichtung 4 und eine Längsschneideeinrichtung 5 auf, die in dieser Reihenfolge in einer Arbeitsrichtung R an einem Maschinengestell 6 angeordnet sind. Eingangsseitig befindet sich an dem Maschinengestell 6 eine Zufuhrrolle 7, von der eine Folie 8 (auch als Unterbahn bezeichnet) abgezogen wird. Im Bereich der Siegelstation 3 ist ein Materialspeicher 9 vorgesehen, von dem eine Deckelfolie 10 (auch als Oberbahn bezeichnet) abgezogen wird. Ausgangsseitig ist an der Verpackungsmaschine eine Abfuhreinrichtung 13 in Form eines Transportbandes vorgesehen, mit der fertige, vereinzelte Verpackungen 21 abtransportiert werden. Ferner weist die Tiefziehverpackungsmaschine 1 eine nicht dargestellte Vorschubeinrichtung auf, die die Folie 8 ergreift und diese pro Hauptarbeitstakt in der Arbeitsrichtung R weitertransportiert. Die Vorschubeinrichtung kann zum Beispiel durch beidseitig angeordnete Transportketten ausgeführt sein.

In der dargestellten Ausführungsform ist die Formstation 2 als eine Tiefziehstation zum Formen von Formmulden ausgebildet, bei der in die Folie 8 durch Tiefziehen Mulden 14 geformt werden. Dabei kann die Formstation 2 derart ausgebildet sein, dass in der Richtung senkrecht zur Arbeitsrichtung R mehrere Mulden nebeneinander gebildet werden. In Arbeitsrichtung R hinter der Formstation 2 ist eine Einlegestrecke 15 vorgesehen, in der die in der Folie 8 geformten Mulden 14 mit Produkt 16 befüllt werden.

Die Siegelstation 3 verfügt über eine verschließbare Kammer 17, in der die Atmosphäre in den Mulden 14 vor dem Versiegeln zum Beispiel durch Gasspülen mit einem Austauschgas oder mit einem Gasgemisch ersetzt werden kann.

Die Querschneideeinrichtung 4 ist als Stanze ausgebildet, die die Folie 8 und die Deckelfolie 10 in einer Richtung quer zur Arbeitsrichtung R zwischen benachbarten Mulden 14 durchtrennt. Dabei arbeitet die Querschneideeinrichtung 4 derart, dass die Folie 8 nicht über die gesamte Breite aufgetrennt wird, sondern zumindest in einem Randbereich nicht durchtrennt wird. Dies ermöglicht einen kontrollierten Weitertransport durch die Vorschubeinrichtung. Die Längsschneideeinrichtung 5 ist in der dargestellten Ausführungsform als eine Messeranordnung ausgebildet, mit der die Folie 8 und die Deckelfolie 10 zwischen benachbarten Mulden 14 und am seitlichen Rand der Folie 8 durchtrennt werden, so dass hinter der Längsschneideeinrichtung 5 vereinzelte Verpackungen vorliegen.

Die Tiefziehverpackungsmaschine 1 verfügt ferner über eine Steuerung 18. Sie hat die Aufgabe, die in der Tiefziehverpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Tiefziehverpackungsmaschine 1 für bzw. durch einen Bediener.

Die generelle Arbeitsweise der Tiefziehverpackungsmaschine 1 wird im Folgenden kurz beschrieben:

Die Folie 8 wird von der Zufuhrrolle 7 abgezogen und durch die Vorschubeinrichtung in die Formstation 2 transportiert. In der Formstation 2 werden durch Tiefziehen Mulden 14 in die Folie 8 gebildet. Die Mulden 14 werden zusammen mit dem umgebenden Bereich der Folie 8 in einem Hauptarbeitstakt zu der Einlegestrecke 15 weitertransportiert, in der sie mit Produkt 16 befüllt werden.

Anschließend werden die befüllten Mulden 14 zusammen mit dem sie umgebenden Bereich der Folie 8 in dem Hauptarbeitstakt durch die Vorschubeinrichtung in die Siegelstation 3 weitertransportiert. Die Deckelfolie 10 wird nach einem Ansiegelvorgang an die Folie 8 mit der Vorschubbewegung der Folie 8 weitertransportiert. Dabei wird die Deckelfolie 10 von dem Materialspeicher 9 abgezogen. Durch das Ansiegeln der Deckelfolie 10 auf die Mulden 14 entstehen verschlossene Verpackungen 21, die in den nachfolgenden Schneidstationen 4 und 5 vereinzelt und mittels der Abfuhreinrichtung 13 aus der Tiefziehverpackungsmaschine 1 heraustransportiert werden.

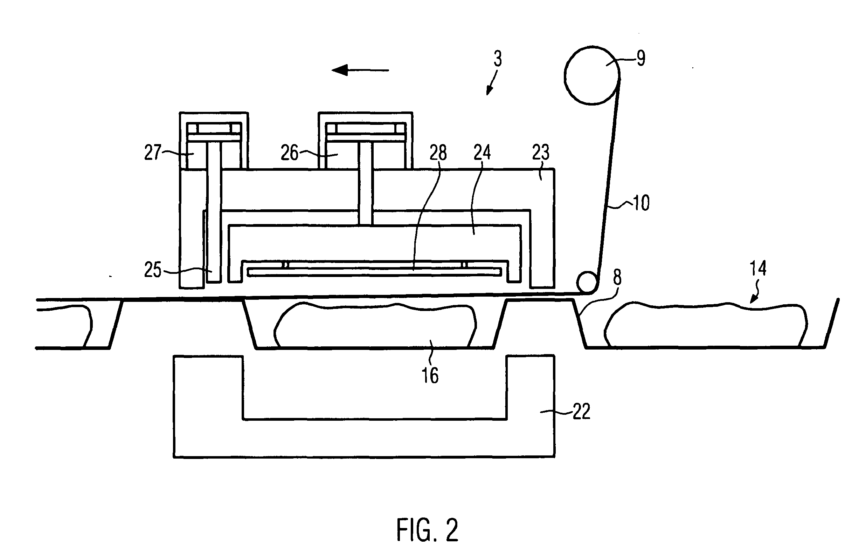

Figur 2 zeigt eine schematische Schnittansicht der Siegelstation 3 mit einem Siegelwerkzeugunterteil 22, einem Siegelwerkzeugoberteil 23, einer ersten Siegelplatte 24 und einer zweiten Siegelplatte 25. Die erste Siegelplatte 24 ist über einen ersten Aktor 26 gegenüber dem Siegelwerkzeugoberteil 23 und die zweite Siegelplatte 25 über einen zweiten Aktor 27 orthogonal zur Folie 8 bewegbar. Beide Aktoren 26, 27 bzw. beide Siegelplatten 24, 25 sind getrennt betätigbar und die Aktoren 26, 27 sind als Membrane ausgeführt. Die erste Siegelplatte 24 weist an ihrer Unterseite eine Produktschutzplatte 28 auf, um die Wärme der Siegelplatte 24 nur auf die Siegelfläche und nicht auf das Produkt 16 wirken zu lassen. In dieser offenen Stellung der Siegelstation 3 sind ihr eine noch nicht verschlossene Mulde 14 der Folie 8 mit dem Produkt 16 und eine Deckelfolie 10 zugeführt.

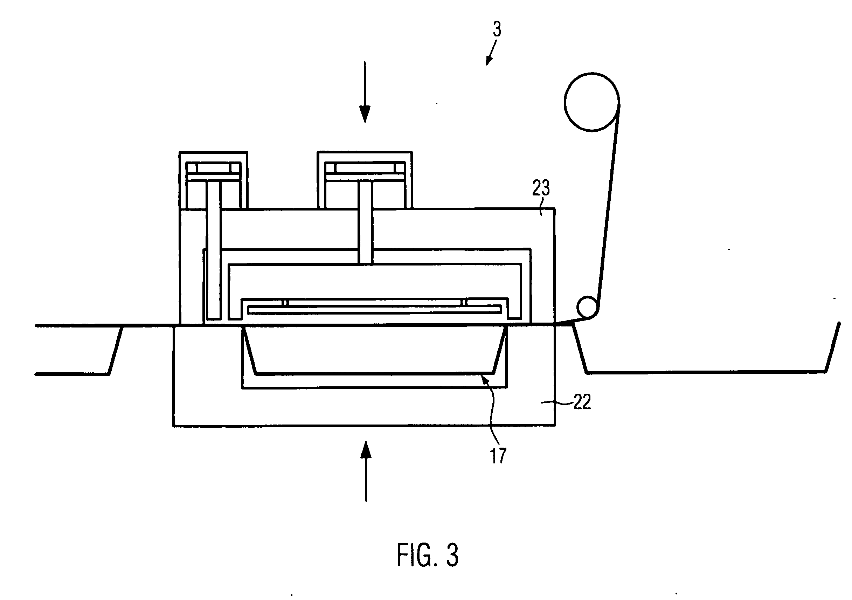

Figur 3 zeigt die Siegelstation 3 in einer geschlossen Stellung, bei der das Siegelwerkzeugunterteil 22 mit dem Siegelwerkzeugoberteil 23 die geschlossene Kammer 17 bildet, um die Kammer 17 und damit auch das Innere der Mulde 14 evakuieren und/oder begasen zu können.

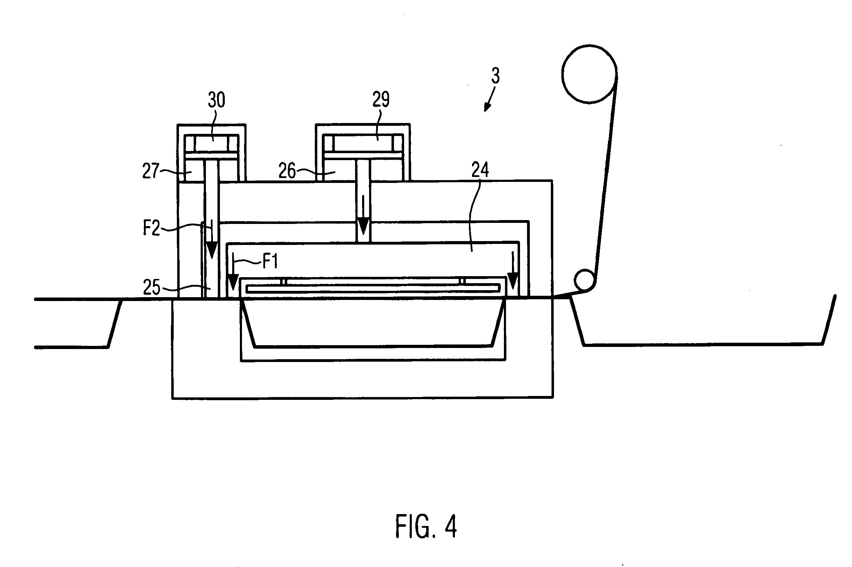

Nach dem Evakuier- bzw. Begasungsprozess werden die Aktoren 26, 27, wie in Figur 4 dargestellt, aktiviert und bewegen die Siegelplatten 24, 25 gegen die Folien 8, 10 bzw. das Siegelwerkzeugunterteil 22 und erzeugen eine erste Siegelkraft F1 für die Siegelung der beiden Folien 8, 10 mit der ersten Siegelplatte 24 und eine zweite Siegelkraft F2 für die Siegelung mit der zweiten Siegelplatte 25. Die Siegelkraft F1 ist (nur) abhängig von dem ersten Aktor 26 und die Siegelkraft F2 ist (nur) abhängig von dem zweiten Aktor 27, wobei die Siegelkraft F1 unterschiedlich zur Siegelkraft F2 sein kann. In dem gezeigten Beispiel sind die Kräfte mittels der Drücke in der ersten Membran 29 bzw. der zweiten Membran 30 einstellbar. Bei Verwendung von Servoantrieben anstatt von Membranen kann die Siegelkraft über das Drehmoment bzw. über den Motorstrom eingestellt werden.

Figur 5 zeigt in der Draufsicht auf die erzeugte, versiegelte Verpackung 21 eine umlaufende Siegelnaht 11, die die Mulde 14 der Verpackung 21 luftdicht verschließt und eine flächige Siegelung 12, die eine Öffnung 31 durch beide Folien 8, 10 hindurch zum Aufhängen der Verpackung 21 aufweist. Die umlaufende Siegelnaht 11 wird mittels der ersten Siegelplatte 24 mit der durch den ersten Aktor 26 vorgesehenen ersten Siegelkraft F1 erzeugt und die flächige Siegelung 12 wird mittels der zweiten Siegelplatte 25 mit der durch den zweiten Aktor 27 vorgesehenen zweiten Siegelkraft F2 erzeugt. Dabei ist die Siegelnaht 11 so gesiegelt, dass ein Öffnen der Verpackung 21 durch Abziehen der Deckelfolie 10 von der Folie 8 möglich ist, während die flächige Siegelung 12 unlösbar gesiegelt werden kann.

Die Aufteilung bzw. Anordnung der ersten 11 und zweiten Siegelung 12 ist nicht auf die Figur 5 dargestellte Form begrenzt, es sind weitere Varianten denkbar. Die erste 24 und zweite Siegelplatte 25 können auch derart gestaltet sein, dass mehrere Verpackungen 21 in der Siegelstation 3 während eines Siegelprozesses erzeugt werden. Es sind ebenso mehrere Aktoren für eine Siegelplatte 24, 25 denkbar. Der Begriff "Siegelplatte" umfasst im Rahmen der Erfindung auch anders konstruierte Siegelwerkzeugteile wie Siegelstempel, Siegelschienen, Siegelbalken o. ä.

## Patentansprüche

1. Tiefziehverpackungsmaschine (1), umfassend eine Siegelvorrichtung (3), wobei die Siegelvorrichtung (3) wenigstens ein erstes (24) und ein zweites Siegelwerkzeug (25) zum Erzeugen einer ersten (11) und einer zweiten Siegelung (12) von einer Unterbahn (8) mit einer Oberbahn (10) umfasst, **dadurch gekennzeichnet, dass** für die Siegelwerkzeuge (24, 25) Aktoren (26, 27) vorgesehen sind, mittels derer die Siegelkräfte (F1, F2) der Siegelwerkzeuge (24, 25) individuell einstellbar sind, wobei das erste Siegelwerkzeug (24) zum Erzeugen einer umlaufenden Siegelnaht (11) um ein Produkt (16) herum und das zweite Siegelwerkzeug (25) zum Erzeugen einer flächigen Siegelung (12) vorgesehen sind.

2. Tiefziehverpackungsmaschine nach Anspruch 1, **dadurch gekennzeichnet, dass** die Aktoren (26, 27) als Membrane, Pneumatikzylinder oder motorische Antriebe vorgesehen sind.

3. Tiefziehverpackungsmaschine nach einem der vorangehenden Ansprüche, **dadurch gekennzeichnet, dass** die Verpackungsmaschine (1) eine Steuerung (18) umfasst, mittels derer die Siegelkraft (F1, F2), die Siegeltemperatur und/oder die Siegelzeit für die erste (11) und die zweite Siegelung (12) separat einstellbar ist.

4. Tiefziehverpackungsmaschine nach einem der vorangehenden Ansprüche, **dadurch gekennzeichnet, dass** das erste (24) und/oder zweite Siegelwerkzeug (25) für mehrere gleichartige Siegelungen (11, 12) vorgesehen ist.

5. Tiefziehverpackungsmaschine nach einem der vorangehenden Ansprüche, **dadurch gekennzeichnet, dass** die Siegelung (11) des ersten Siegelwerkzeugs (24) und die Siegelung (12) des zweiten Werkzeugs (25) überlappungsfrei miteinander sind.

6. Tiefziehverpackungsmaschine nach einem der vorangehenden Ansprüche, **dadurch gekennzeichnet, dass** die erste (11) und zweite Siegelung (12) zeitgleich erzeugbar sind.

## Claims

1. A thermoforming packaging machine (1) including a sealing device (3), said sealing device (3) comprising at least a first (24) and a second sealing tool (25) for producing a first (11) and a second seal (12) uniting a lower web (8) with a top web (10), **characterized in that** actuators (26, 27) are provided for the sealing tools (24, 25), by means of which the sealing forces (F1, F2) of the sealing tools (24, 25) can be adjusted individually,
wherein the first sealing tool (24) is provided for producing a sealed seam (11) which extends circumferentially around a product (16), and that the second sealing tool (25) is provided for producing a planar seal (12).

2. The thermoforming packaging machine according to claim 1, **characterized in that** the actuators (26, 27) are provided in the form of diaphragms, pneumatic cylinders or motor drives.

3. The thermoforming packaging machine according to one of the preceding claims, **characterized in that** the packaging machine (1) includes a controller (18) by means of which the sealing force (F1, F2), the sealing temperature and/or the sealing time for the first (11) and the second seal (12) can be adjusted separately.

4. The thermoforming packaging machine according to one of the preceding claims, **characterized in that** the first (24) and/or the second sealing tool (25) is/are provided for a plurality of seals (11, 12) of the same kind.

5. The thermoforming packaging machine according to one of the preceding claims, **characterized in that** the seal (11) of the first sealing tool (24) and the seal (12) of the second tool (25) do not overlap each other.

6. The thermoforming packaging machine according to one of the preceding claims, **characterized in that** the first (11) and the second seal (12) can be produced simultaneously.

## Revendications

1. Machine d'emballage par emboutissage ou thermoformage (1), comprenant un dispositif de scellage (3), le dispositif de scellage (3) comportant au moins un premier (24) et un deuxième outillage de scellage (25) pour produire un premier (11) et un deuxième scellage (12) d'une nappe inférieure (9) avec une nappe supérieure (10),
**caractérisée en ce que** pour les outillages de scellage (24, 25) sont prévus des actionneurs (26, 27) au moyen desquels il est possible de régler individuellement les forces de scellage (F1, F2) des outillages de scellage (24, 25), le premier outillage de scellage (24) étant prévu pour réaliser un joint de scellage en cordon périphérique (11) autour d'un produit (16), et le deuxième outillage de scellage (25) pour réaliser un scellage de surface (12).

2. Machine d'emballage par emboutissage ou thermoformage selon la revendication 1, **caractérisée en ce que** les actionneurs (26, 27) sont prévus sous la forme de membranes, de vérins pneumatiques ou d'entraînements motorisés.

3. Machine d'emballage par emboutissage ou thermoformage selon l'une des revendications précédentes, **caractérisée en ce que** la machine d'emballage par emboutissage ou thermoformage (1) comprend une commande (18) au moyen de laquelle il est possible de régler séparément la force de scellage (F1, F2), la température de scellage et/ou le temps de scellage pour le premier (11) et le deuxième scellage (12).

4. Machine d'emballage par emboutissage ou thermoformage selon l'une des revendications précédentes, **caractérisée en ce que** le premier (24) et/ou le deuxième outillage de scellage (25) sont prévus pour plusieurs scellages (11, 12) de même type.

5. Machine d'emballage par emboutissage ou thermoformage selon l'une des revendications précédentes, **caractérisée en ce que** le scellage (11) du premier outillage de scellage (24) et le scellage (12) du deuxième outillage de scellage (25) ne se chevauchent pas mutuellement.

6. Machine d'emballage par emboutissage ou thermoformage selon l'une des revendications précédentes, **caractérisée en ce que** le premier (11) et le deuxième scellage (12) peuvent être réalisés simultanément dans le temps.
